(19) Europäisches Patentamt
European Patent Office
Office européen des brevets

(11) Veröffentlichungsnummer: **0 051 212**
**B1**

(12) # EUROPÄISCHE PATENTSCHRIFT

(45) Veröffentlichungstag der Patentschrift: **22.07.87**

(51) Int. Cl.⁴: **C 08 L 83/04**

(21) Anmeldenummer: **81108679.2**

(22) Anmeldetag: **22.10.81**

(54) **Flammwidrige Polysiloxanformmassen.**

(30) Priorität: **04.11.80 DE 3041588**

(43) Veröffentlichungstag der Anmeldung: **12.05.82 Patentblatt 82/19**

(45) Bekanntmachung des Hinweises auf die Patenterteilung: **22.07.87 Patentblatt 87/30**

(84) Benannte Vertragsstaaten: **BE DE FR GB IT**

(56) Entgegenhaltungen:
**DE-A-1 900 968**
**FR-A-2 172 763**
**FR-A-2 297 229**
**US-A-4 087 399**

(73) Patentinhaber: **BAYER AG, Konzernverwaltung RP Patentabteilung, D-5090 Leverkusen 1 Bayerwerk (DE)**

(72) Erfinder: **Ackermann, Jürgen, Dr., Starenweg 17, D-5060 Bergisch- Gladbach (DE)**
Erfinder: **Moretto, Hans- Heinrich, Dr., Formesstrasse 13, D-5000 Koeln 80 (DE)**
Erfinder: **Kniege, Wilfried, Alte Wipperfürther Strasse 80, D-5060 Bergisch- Gladbach (DE)**
Erfinder: **Rauer, Werner, Kolberger Strasse 84, D-5090 Leverkusen 3 (DE)**

EP 0 051 212 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft Polyorganosiloxanformmassen mit erhöhtem Widerstand gegen Entflammung und verbessertem Selbstverlöschungsverhalten, ohne die bekanntermaßen physiologische Unbedenklichkeit von Siloxanen bzw. Polysiloxanformmassen durch die die Flammwidrigkeit verbessernde Zusätze zu verschlechten.

Schutz und Sicherheit vor Feuer werden vom Verbraucher, Produzenten sowie Versicherern immer stärker gefordert werden. Es gilt dabei auch bei Einsatz von gummiartigen Formmassen die Schadensausbreitung zu begrenzen, ohne auf die Vorzüge gummiartiger Werkstoffe für bestimmte Formteile zu verzichten oder einen Verlust bei der Isolationswirkung von Siloxan-Kabelmänteln für Meß- und Steuerleitungen hinnehmen zu müssen.

Schließlich soll das Risiko einer Gefährdung durch Art und Menge der zu vermischenden Bestandteile bei der Herstellung derartiger Formteile genauso klein sein wie jenes einer evtl. Gefährdung durch die vom Formteil verursachten Flammgase nach einer Feuereinwirkung. Von den flammwidrigen Organopolysiloxanformmassen wird schließlich erwartet, daß sie wirtschaftlich herstellbar sind, d.h. daß sie auf gebräuchlichen Mischaggregaten auch ohne ungewöhnliche Temperaturbeschränkung problemlos herzustellen sind.

Zwar zeigen Organosiloxanformmassen allgemein ein im Vergleich zu anderen Gummiarten verbesserte Temperaturstabilität oberhalb 150°C, sie haben aber wie andere Gummi-Mischungen den Nachteil, daß sie bei höheren Temperaturen entzündet werden können und dann kaum selbstverlöschende Eigenschaften aufweisen.

In der Vergangenheit wurden zahlreiche Versuche unternommen, diese Nachteile zu beseitigen bzw. zu vermindern. In der US-PS 2 684 349 wird die Verwendung von $TiO_2$ beschrieben. Die britische Patentschrift 1 104 606 beschreibt beispielsweise das Zumischen von platinhaltigen Materialien zu Polysiloxanen. Der damit erreichte Standard konnte durch die Kombination von Platin und speziellem Ruß (DE-OS 2 034 919) bzw. pyrogenem $TiO_2$ (DE-OS 2 035 361)-weiter verbessert werden.

Solchermaßen hergestellte Formmassen hatten aber den Nachteil, daß die gute Selbstverlöschungsfähigkeit nicht mit jedem der gebräuchlichen Härtungsmittel erzielt wird, wie auch die US-PS 3 996 188 lehrt. Ferner tritt dabei der Nachteil einer vorweggenommenen unerwünschten Einfärbung der Formteile durch die Zugabe größerer Mengen der pigmentierten Hitzestabilisatoren wie Ruß oder Eisenoxiden auf.

Für spätere Anwendungen, z. B. Kabelisolierungen, kann dies besonders beim Ruß Einschränkungen oder Mehraufwand bei der farblichen Kennzeichnung bedeuten. Weiterhin muß, falls Ruß verwendet wird, dieser extrem schwefelfrei sein. Die Verwendung der Siloxanformmassen für elektrische Isolierungen und gummielastische Formteile schließt die für andere Elastomere an sich bekannten Flammverzögerungsmittel, wie Phosphor- oder Halogenverbindungen mit Antimonoxiden aus, da hierdurch entweder der elektrische Widerstand herabgesetzt, die mechanischen Eigenschaften verschlechtert oder die Zusätze aus toxikologischen Gründen nicht immer geeignet sind.

Bei der Herstellung von Formmassen nach DE-AS 2 353 826, die als Flammschutzzusatz Platin zusammen mit einer Azoverbindung der Formel R-N=N-R bzw.

$$X\underset{\overset{\|}{O}}{C}-N=N-\underset{\overset{\|}{O}}{C}X$$

beansprucht, wurde ein Teil dieser vorher genannten Ziele erreicht, insbesondere konnte das Problem eines härtungsmittelunabhängigen Flammschutzes gelöst werden. Ein solches System ist auch mit Dialkylperoxiden sehr gut selbstverlöschend, wobei allgemein das Niveau der Selbstverlöschungsfähigkeit gegenüber dem System Pt + $TiO_2$ deutlich übertroffen wird, wenn man den Platin und in kleinsten Mengen Azoisobutyronitril oder Azodicarbonamid enthaltenden Formmassen zusätzlich $TiO_2$ zusetzt. Die signifikanten Verbesserungen gegenüber DE-AS 2 035 361 beschränken sich aber weitgehend auf die beiden genannten Stickstoffverbindungen, die stellvertretend für die allgemeine Formel in DE-AS 2 353 826 genannt werden. Darüber hinaus kennt man die Verwendung N-haltiger Verbindungen zur Pigmentierung, wie in DE-AS 2 812 401, oder als Zusatz in flammwidrigen Elastomeren, wie in DE-OS 2 829 805 oder DE-OS 2 726 567.

Mit den in DE-OS 2 502 936 vorgeschlagenen Stickstoffverbindungen wird das Niveau von denjenigen in DE-AS 2 353 826 erreicht, Toxizität, Handhabung und niedrige Zersetzungstemperaturen und damit z.T. einhergehende radikalische Vorvernetzung der vinylgruppenhaltigen Siloxanformmassen stellen bei den in DE-AS 2 353 826 und DE-OS 2 502 936 genannten Zusätzen, die die Selbstverlöschungsfähigkeiten von Pt-$TiO_2$ Zusätzen enthaltenden Formmassen verbessern können, Begrenzungen für die wirtschaftliche Herstellung dar; das gleiche gilt für die Zusätze wie sie in US-A 4 087 399 genannt werden.

Neben der Beseitigung der geschilderten Nachteile besteht der Wunsch, den Flammschutz auch auf Systeme auszudehnen, die in gewissen Mengen SiOH-haltige Polymere enthalten. Es ist nämlich bekannt, daß bei SiOH-haltigen Siloxanformmassen oder wenn die Flammwidrigkeit bei feuchter Luft gemessen wird, die Selbstverlöschungsfähigkeit abnimmt, wie die DE-OS 2 035 361 und N. Grassie und Mac Farlane, Eur. Polymer Journal 14 (1978) S. 875 - 84 lehren. Neben den vorgenannten Zielen der Verarbeitungssicherheit unter toxikologischen und technischen Gesichtspunkten besteht deshalb in der Praxis der Wunsch nach "single cure"-Eigenschaften. Für eine Kabelisolierung bedeutet dies, Aufbau eines möglichst hohen Flammschutzes

nach kurzer Vulkanisation im Heißluftkanal ohne Nachvulkanisation. Der Flammschutz muß so wirksam sein, daß es auch ohne Nachvulkanisation zu keiner Verschlechterung der Selbstverlöschungsfähigkeit trotz Anwesenheit von flüchtigen Siloxanen, insbesondere siloxanhaltigen Verarbeitungshilfsmitteln und Peroxidresten kommt.

Diese Forderungen konnten bislang von den vorgeschlagenen Systemen nicht voll erfüllt werden.

Gegenstand der vorliegenden Erfindung sind nun zu flammwidrigen Produkten härtbare Polysiloxanformmassen bestehend aus

a) einem Diorganopolysiloxan mit der durchschnittlichen Formel

$$R_nSi\,O_{\frac{4-n}{2}}$$

mit 1,9 - 2,05 organischen Resten je Si-Atom, wobei die Reste Alkyl-, Alkenyl- und/oder Arylreste mit 1 - 8 C-Atomen sein können,

b) einer feinzerteilten Kieselsäure sowie gegebenenfalls zusätzlichen anderen Füllstoffen und/oder, Farbpigmenten,

c) feinzerteiltem $TiO_2$ mit einer BET-Oberfläche von mehr als 20 $m^2/g$ und einer Korngröße unter 0,5 $\mu m$, welches durch Aufschluß und Fällung in Wasser gewonnen wurde,

d) Platin und/oder eine seiner schwefelfreien Verbindungen mit oder ohne Träger,

e) einem Hartungsmittel, wie z. B. ein organisches Peroxid und/oder ein Wasserstoffsiloxan oder -silan, welche dadurch gekennzeichnet sind, daß die Formmassen zusätzlich in einer Menge von 0,05 - 10 Gew.-Teilen pro 100 Gew.-Teile a) der vorgenannten Mischungsbestandteile

f) eine oder mehrere Stickstoff-Verbindungen aus der Gruppe Harnsäure, Harnstoff, Guanin, Cyanoguanidin, Aminoguanidin, Diphenylguanidin und/oder Semicarbazid

enthalten.

Erfindungsgemäß sollen daher nicht-toxische Siloxanformmassen bereitgestellt werden, die nach kurzzeitiger Härtung ein gutes Flammwidrigkeits- und Selbstverlöschungsverhalten aufweisen und deren elektrische Isoliervermögen und mechanische Eigenschaften keine Verschlechterung gegenüber vergleichbaren Siloxanformmassen aufweisen.

Überraschenderweise wurde nunmehr gefunden, daß Siloxanformmassen, die Pt-Verbindungen zusammen mit feinzerteiltem, gefälltem $TiO_2$, darüber hinaus aber noch eine oder mehrere der genannten Stickstoffverbindungen enthalten, gleiche oder bessere Flammwidrigkeits- und Selbstverlöschungseigenschaften ergeben als Formmassen, die nur Pt + $TiO_2$ oder solche, die Pt und bestimmte Azoverbindungen enthalten.

Die erfindungsgemäßen Formmassen weisen insbesondere den Vorzug auf, daß die Zusätze toxikologisch unbedenklich sind, die Verarbeitbarkeit sicherer und ein guter Flammschutz auch noch bei Anwesenheit einer gewissen Menge von flüchtigen Siloxan- und Peroxidresten gewährleistet wird.

Die Wirksamkeit der genannten Stickstoff-Verbindungen muß deshalb als überraschend angesehen werden, weil andere stickstoffreiche Verbindungen wie z. B. Hydrazindicarboxamid und Pyrazol-Derivate (DE-OS 2 502 936, 2 812 401) wesentlich weniger wirksam sind, oder aber toxikologisch nicht unbedenklich sind.

Die Verwendung der genannten Zusätze erlaubt die Herstellung flammgeschützter Siloxanformmassen, unabhängig vom eingesetzten Härtungsmittel oder Peroxid. Sie unterliegen nicht den Schwierigkeiten rußgefüllter Mischungen und sind toxikologisch unproblematischer zu betrachten als einige der Flammschutzzusätze, die Azoderivate enthalten. Die neugeschaffenen Mischungen zeigen auch ohne Entfernung flüchtiger Siloxanreste durch Nachvulkanisation eine verbesserte Flammwidrigkeit.

Die erfindungsgemäßen Siloxanformmassen enthalten ein Diorganopolysiloxan mit Einheiten der durchschnittlichen Formel

$$R_nSi\,O_{\frac{4-n}{2}}$$

oder Gemische von Diorganopolysiloxanen, in welcher R einen oder mehrere substituierte oder unsubstituierte Reste wie Methyl, Ethyl, Vinyl, Aryl, Arylethyl sein können. Innerhalb eines Moleküls können dabei verschiedene Reste nebeneinander vorkommen. Substituenten an R können sein Cl, CN, F oder Vinyl. Die Zahl "n" stellt eine positive Zahl zwischen 1,90 - 2,05 dar. Weiterhin sollen die erfindungsgemäßen Siloxanformmassen eine feinzerteilte Kieselsäure, evtl. zusätzliche nichtverstärkende Füllstoffe wie Quarzmehl, Eisenoxide, Diatomeenerde und andere Pigmente, Härtungsmittel wie die üblichen Peroxide und/oder Wasserstoffsiloxane bzw. -silane und zur Erzielung ihrer flammwidrigen Eigenschaften Platinverhindungen und feinverteiles, gefälltes $TiO_2$ enthalten.

Die erfindungsgemäß vulkanisierbaren Siloxanformmassen mit den Bestandteilen a) - f) weisen nicht nur einen erhöhten Widerstand gegen Entflammung und Weiterbrennen auf, sondern sie zeigen auch gleich gute mechanische Eigenschaften wie Formmassen ohne Zusätze wie übliche Hitzestabilisatoren (z. B. Verbindungen des Eisens, Zirkons oder der seltenen Erden). Derartige Zusätze können jedoch gegebenenfalls noch mitverwendet werden.

Beim Bestandteil a) der erfindungscemäßen Formmassen handelt es sich um die üblichen Organopolysiloxane oder daraus hergestellte Gemische, die bekanntlich für mechanische Eigenschaften der

gehärteten Kautschuke mit b) hauptsächliche Bestandteile darstellen. Ihre Zusamnensetzung kann mit der allgemeinen Formel

$$R_nSiO_{\frac{4-n}{2}}$$

wiedergegeben werden, wobei es sich bei den Resten R um die obengenannten Kohlenwasserstoffe mit folgenden möglichen Substituenten an R handelt: Cl, CN, $CF_3$. Die Zahl n soll von 1,90 - 2,05 laufen. Die Kettenenden bilden OH-, Trimethylsilyl-, Dimethyl-vinylsilyl-, Diphenylvinylsilyl-, Methylphenylvinylsilyl-Gruppen.

Die Viskositäten der einsetzbaren Organopolysiloxane liegen im Bereich der üblicherweise für Silikonelastomere benutzten Polymere von 200 bis 200 x $10^6$ mPas.

Für den Fall, daß außer den Endgruppen weitere Phenyl- bzw. Vinyl-Einheiten in die Polymere eingebaut sein sollen, so beschränkt sich ihre Verwendung auf 0,01 - 60 Gew.-% Diphenylsiloxy oder Methylphenylsiloxy bzw. 0,01 - 3 Gew.-% Vinylmethylsiloxy oder Phenylvinylsiloxy-Einheiten pro Gesamt-Bestandteil a).

Die Bezeichnung Gemisch bedeutet hier Abmischungen von zwei oder mehreren Organopolysiloxanen wie in GB-PS 1 040 408, DE-AS 1 020 456, wobei in einer Komponente von a) ein ausgewählter Rest R überwiegt. Für den Fall, daß es sich hierbei um Vinylsiloxyreste handelt, wird dieses vinylreichere Organopolysiloxan in untergeordneter Menge zur anderen Siloxan-Komponente von a) mit der vorher genannten Beschränkung gemischt.

Vorzugsweise ist das Organopolysiloxan a) ein lineares Dimethylpolysiloxan mit weniger als 2 % Vinylmethylsiloxyeinheiten.

Der Füllstoff b) - sowohl beladen oder unbeladen - kann einer der bekannten feinzerteilten und verstärkenden Siliciumdioxide sein, die durch Flammhydrolyse oder Fällung gewonnen werden. Sie sollten dann vorzugsweise eine durch Absorption nach BET gemessene Oberfläche von 130 - 500 $m^2/g$ aufweisen, um eine ausreichende Festigkeit zu erreichen. Es sollten 20 - 100 Gewichtsteile verstärkenden Füllstoffs eingesetzt werden, pro 100 Gew.-Tl. a).

Das Einmischen von unbeladenen verstärkenden Füllstoffen erfordert den Einsatz von Verarbeitungshilfsmitteln wie bestimmten Silanolen, Siloxanolen, Alkoxysilanen oder Silazanen. Solche allgemein bekannten Verbindungen können sein: Diphenylsilandiol (US-PS 3 551 382), $HO(me_2SiO)_nH$ (FR-PS 1 492 655), $me_3SiNHSime_3$ (GB-PS 1 024 234), $RO(me_2SiO)_nH$ (DE-OS 2 521 937), (US-PS 3 377 311), $Z_2Si$ R X (FR-PS 2 382 456), $H_2O$ (DE-AS 1 224 038).

Sie werden eingesetzt, um das sogenannte "crepe hardening" der Mischungen zu vermeiden. Die einzusetzende Menge ergibt sich für den Fachmann aus der angestrebten Mischungsviskosität und der Lagerstabilität zwischen 1 - 30 Gewichtsteilen, je nach Oberfläche und Art pro 100 Teile der verstärkenden Füllstoffe.

Neben den verstärkenden Füllstoffen können darüber hinaus nichtverstärkende, inerte Füllstoffe in Mengen von 0,1-300 Gewichtsteilen eingesetzt werden, deren Partikelgröße kleiner 50 µm beträgt. Beispiele solcher Füllstoffe sind: Quarzmehle, Diatomeenerden, Glasfasern, Asbestfasern, Glimmer, Farbpigmente wie Eisenoxide, Calciumcarbonat, Zinkoxid, farbige Spinelle, Ruße oder Aluminiumoxide.

Beim Bestandteil c), einem für einen nachhaltigen Flammschutz zusammen mit d) und f) wichtigen Bestandteil, handelt es sich um feinzerteilte, oberflächenreiche Titanoxide, deren Partikeldurchmesser kleiner 0,5 µm ist und die eine absorptionsmäßig gemessene Oberfläche von größer 20 $m^2/g$ nach BET haben. Dabei werden erfindungsgemäß solche Titanoxide, die durch hydrolytische Fällung aus $TiCl_4$ oder Titanaten entstanden sind, zusammen mit den Bestandteilen d) und f) eingesetzt. Das $TiO_2$-Material sollte frei von starken Säuren und Basen sein, und einen S-Gehalt von weniger als 0,2 Gew.-% aufweisen, der pH-Wert des gefällten Produkts liegt vorzugsweise zwischen etwa 4 und 8. Der Bestandteil b) wird in einer Menge von 10-200 Gew.-Teile, vorzugsweise 20-100 Gew.-Teile pro 100 Gew.-Teile a) eingesetzt. Der Bestandteil c) soll in einer Menge von 0,5 - 60, vorzugsweise 1 - 45 Gew.-Teile - ebenfalls pro 100 Gew.-Teile auf a) - vorliegen.

Die Verwendung des Bestandteiles d) ist für die Erlangung eines Flammschutzes innerhalb dieses Systems von entscheidender Bedeutung, im besonderen dessen Menge und gleichmäßige Verteilung. Von nachrangigerer Bedeutung ist dabei die Oxidationsstufe des Platins in seinen Verbindungen. Der Bestandteil d) kann deshalb als metallisches Platin oder als Platinkomplex auf einem Träger oder direkt zugesetzt werden. Als Träger kommen alle feinteiligen mineralischen Materialien, wie Asbest, Kohle, Kieselsäuren oder Aluminiumoxide in Frage. Eine Einschränkung für Träger und Pt-Verbindungen ist die Schwefelfreiheit dieser Stoffe.

Als wirksame Platinkomplexe erweisen sich Pt-haltige Hydrosilylierungskatalysatoren mit den Liganden: Chlorid, Carbonyl, Bromid, Jodid, Olefinen, Alkoholen, Ketonen, Ethern, Aminen, Phosphinen.

Für die erfindungsgemäße Wirkung wird der Bestandteil d) in einer Menge von 3 - 400 Gewichtsteilen Platin je Million Gewichtsteile des Bestandteils a) eingesetzt.

Die erfindungsgemäßen Formmassen zeichnen die zusätzliche Verwendung der Komponente f) aus; dadurch

wird deren Flammwidrigkeit im Vergleich zu Formmassen, die nur die Bestandteile a) - d) und e) enthalten, erheblich verbessert.

Die erfindungsgemäße Wirksamkeit wird dabei von den beschriebenen Stickstoff-Verbindungen in einer Menge von 0,05 - 10,0 Gew.-Teilen, vorzugsweise 0,1 - 5 Gew.-Teilen pro 100 Gewichtsteile a) erreicht.

Die erforderliche gleichmäßige Verreilung wird z. B. durch feinste Vermahlung und intensives Vermischen mit den Bestandteilen a) - d) erzielt.

Mit dem Bestandteil e) sind die für Siloxanformmassen üblichen Härtungsmittel umschrieben, die nach Zumischen oder Zumischen und Erhitzen der Formmassen den Kautschuk vulkanisieren.

Beispiele solcher Härtungsmittel sind die für Heißvulkanisate gebräuchlichen organischen Peroxide wie Bisbenzoylperoxid, die Bis(2,3)-, (2,4)- oder (2,5)-Dichlorbenzoylperoxide, Di-tert.-butylperoxid, Butylperbenzoat, Dicumylperoxid, 2,5-Bis-(tert.-butylperoxy)-2,5-dimethylhexan.

Eine Härtung ist aber auch mit Wasserstoff-Siloxanen oder Silanen möglich. Ebenso können die Formmassen bei richtiger Wahl des Bestandteiles a) durch einige der Verbindungen des Bestandteiles f) aushärten, wie in DE-AS 1 166 470, DE-AS 1 120 605 gezeigt werden konnte.

Für den Fall, daß Si-H-gruppenhaltige Siloxane oder Silane eingesetzt werden, mischt man pro Mol Vinylsiloxy-Gruppe der Komponente a) 1 - 6 Mol Si-H-Siloxy-Einheiten über die Komponente e) ein.

Mit den zusätzlich möglichen Hitzestabilisatoren lassen sich die über die Bestandteile a) - f) erzielten Stabilisierungen gegenüber Hitzeeinwirkung weiter steigern. Hierfür gebräuchliche Hitzestabilisatoren können feinstverteilte Eisenoxide (alpha- und gamma-$Fe_2O_3$) Eisensalze oder -Komplexe, Verbindungen des Zirkons, des Titans oder der Seltenen Erden, insbesondere des Cers sein.

Die beschriebenen erfindungsgemäßen Silikon-Formmassen werden mit den Härtungsmitteln e) evtl. f) bei 60 - 350° C unter normalem oder Überdruck während 1- 3 600 sek. gehärtet. Man erhält die sogenannte A-Stufe der Vulkanisation. Anschließend kann eine Nachvulkanisation während 1 - 24 Stunden erfolgen, die hieraus erhaltenen Vulkanisate werden mit B-Stufe bezeichnet. Die mechanischen und elektrischen Eigenschaften einer typischen Mischung sind in einem Beispiel dargestellt.

Die erfindungsgemäß beanspruchten Vorteile a) erhöhter Widerstand gegenüber Entflammung und b) gegenüber Weiterbrennen gehen u.a. aus den gemessenen a) Sauerstoffkonzentrationen zum Weiterbrennen (LOI-Werte) und b) den Selbstverlöschungszeiten nach VDE 0472 als Nachbrenndauer in Sek. nach Beflammung sowie dem Verzehr durch Verbrennung in Gewichtsprozent pro Ausgangsgewicht der Testplatte hervor.

Vorteile der erfindungsgemäßen Formmassen liegen weiterhin darin, daß durch die Zusätze zur Erhöhung der Flammwidrigkeit die Handhabbarkeit sowie wirtschaftliche Herstellung, die physiologische Unbedenklichkeit der Silicone weitgehend erhalten bleibt sowie die Toxizitäten der eingesetzten N-Verbindungen günstiger liegen im Vergleich zu ähnlich flammwidrig wirkenden Azoverbindungen.

Die vorliegende Erfindung wird anhand der folgenden Beispiele näher erläutert (%-Angaben bedeuten Gew.-%).

Als Testplatten für die Messung der Selbstverlöschungsfähigkeit wurden Vulkanisatstreifen der A- und B-Stufe im Format 2 x 150 x 10 mm eingesetzt.

Die Beurteilung erfolgte nach der Testmethode VDE 0472 am senkrecht aufgehängten Teststreifen, die hinsichtlich Beflammungstemperatur (1000° C) und -dauer (15 Sek.) härtere Anforderungen an den Werkstoff stellt als ähnliche Methoden wie z. B. UL 94 V 800° C/10 Sek. oder UL 62 an Kabelmänteln.

Sie unterscheidet sich von anderen Methoden dadurch, daß hier frei aufgehängte Elastomerstreifen ohne Kontakt mit wärmeableitenden metallischen Leitern oder Rahmen verwendet werden.

Als Selbstverlöschungszeit oder Nachbrenndauer gilt der Zeitraum nach Entfernen der Flamme, in dem an der Probe keine Flamme oder Glimmen mehr festzustellen war.

Grundmischung I: 100 Gewichtsteile eines Dimethylpolysiloxans (0,02 % Vinylsiloxyeinheiten) mit einer Kettenlänge von 6000 Einheiten und einer Viskosität von $20.10^6$ mpas, Enden von Trimethylsiloxy-Gruppen begrenzt, mischt man mit 53,5 Gewichtsteilen einer Kieselsäure mit einer Oberfläche nach BET von 200 $m^2/g$ in einem Kneter bei 150° C. Als Verarbeitungshilfen fügt man 3,7 Teile eines Siloxanols mit 18 % SiOH-Gruppen und 4,2 Teile eines Siloxanols, welches zusätzlich 5 % Vinylmethylsiloxy-Einheiten enthält sowie 0,55 Teile Hexamethyldisilazan hinzu.

**Beispiele 1 - 5**

In die fertige Mischung I dispergiert auf einer Walze oder auch im Kneter, bzw. löst man an Kieselsäure komplexierte Platin- bzw. einen siloxanlöslichen Platinkomplex wie z. B. Vinylsiloxyplatinkomplexe.

Anschließend vermischt man die Grundmischung mit $TiO_2$ und den verschiedenen Harnstoffderivaten. Zur Härtung werden die Kautschuke mit a) 0,6 % Dicumylperoxid bzw. b) 1,5 % 50 %-iger Dispersion von 2,4-Dichlorbenzonylperoxid in Siloxanöl. Bei a) 170° C bzw. b) 125° C und 20 bar (20 . $10^5$ $N/m^2$) preßt man während 10 Min. 2 mm starke TTestplatten, die sogen. A-Stufe der Vulkanisate. Die entsprechende B-Stufe erhalt man nach der Temperung von 6 Stunden bei 200° C.

Aus den Testplatten werden Streifen von 10 x 150 x 2 mm geschnitten und nach der Testvorschrift VDE 0472 während 15 Sek. mit einer ca 1000° C heißen Bunsenbrennerflamme in einem Winkel von 45° C beflammt.

Die Nachbrennzeit nach Entfernen der Flamme wird als Selbstverloschungszeit gemessen und dient wie der Gewichtsverlust durch Verzehr als Beurteilungskriterium für die Flammwidrigkeit.

Ein weiteres Kriterium ist die niedrigste Sauerstoffkonzentration, bei der ein Weiterbrennen stattfindet, der LOI-Index nach ASTM 2863.

Die Grundmischung für die zu vergleichenden flammwidrigen Zusätze hat folgende Eigenschaften

| | | Grundmischung I | / I mit Zusätzen c - f |
|---|---|---|---|
| Härte DIN 53 505 | Shore A | 60 | 57 |
| Zugfestigkeit | $N/mm^2$ | 7,5 | 7 |
| Bruchdehnung | % | 450 | 440 |
| Stoßelastizität | DIN 53 512 | 30 | 28 |
| Welterreißfestigkeit ASTM 624 B | N/mm | 20 | 24 |
| Durchschlagfestigkeit | kV/mm | 25 | 25 |
| Spez. Durchgangswiderstand | Ohm. cm | $10^{15}$ | $10^{15}$ |

**Beispiele 1-5:**

1 gefälltes $TiO_2$ amorph nicht neutral BET 50 1,6 % S 2 gefälltes $TiO_2$ amorph neutral, feucht BET 195 0,075 % S 3 gefälltes $TiO_2$ Rutil neutral, feucht BET 200-4 gefälltes $TiO_2$ amorph neutral, getr. BET 195 0,075 % S 5 pyrogenes $TiO_2$ Anatas pH 3 - 4 BET 50

| | | Gew.-Teile | | | | | |
|---|---|---|---|---|---|---|---|
| Grundmischung I | | 100 | 100 | 100 | 100 | 100 | |
| Platin (ppm) | | 45 | 45 | 45 | 45 | 45 | |
| Cyanoguanidin | | 0,3 | 0,3 | 0,3 | 0,3 | 0,3 | |
| 1 | | 3 | - | - | - | - | |
| 2 | | - | 3 | - | - | - | |
| 3 | | - | - | 3 | - | - | |
| 4 | | - | - | - | 3 | - | |
| 5 (nicht anspruchsgemäß) | | - | - | - | - | 3 | |
| CL 50 | A über | 200 | 120 | 77 | 46 | 67 | sec |
| | B | 107 | 28 | 42 | 35 | 33 | sec |
| (CL 50 | = 2,4-Dichlorbenzoylperoxid) | | | | | | |
| DCP | A | | | | 46 | 36 | sec |
| | B | | | | 26 | 28 | sec |
| (DCP | = Dicumylperoxid) | | | | | | |

**Patentansprüche**

1. Zu flammwidrigen Produkten härtbare Polysiloxanformmassen bestehend aus

a) einem Diorganopolysiloxan mit der durchschnittlichen Formel

$$R_nSiO_{\frac{4-n}{2}}$$

mit 1,9 - 2,05 organischen Resten je Si-Atom, wobei die Reste Alkyl-, Alkenyl- und/oder Arylreste mit 1 - 8 C-Atomen sein können,

b) einer feinzerteilten Kieselsäure sowie gegebenenfalls zusätzlichen anderen Füllstoffen und/oder Farbpigmenten,

c) feinzerteiltem $TiO_2$ mit einer BET-Oberfläche von mehr als 20 $m^2/g$ und einer Korngröße unter 0,5 μm, welches durch Aufschluß und Fallung in Wasser gewonnen wurde,

d) Platin und/oder einer seiner schwefelfreien Verbindungen mit und ohne Träger

e) einem Hartungsmittel, wie z. B. ein organisches Peroxid und/oder ein Wasserstoffsiloxan oder -silan, dadurch gekennzeichnet, daß die Formmassen zusätzlich im einer Menge von 0,05 - 10 Gew.-Teilen pro 100 Gew.Tle. a) der vorgenannten Mischungsbestandteile

f) eine oder mehrere Stickstoff-Verbindungen aus der Gruppe Harnsäure, Harnstoff, Guanin, Cyanoguanidin, Aminoguanidin, Diphenylguanidin und/oder Semicarbazid.
enthalten.

2. Verwendung der Polysiloxanmassen gemäß Anspruch 1 zur Herstellung flammwidriger Gegenstände.

**Claims**

1. Polysiloxane moulding compositions which can be cured to give flame-resistant products and consist of
a) a diorganopolysiloxane which has the average formula

$$R_nSiO_{\frac{4-n}{2}}$$

with 1.9 - 2.05 organic radicals per Si atom, it being possible for the radicals to be alkyl, alkenyl and/or aryl radicals with 1 - 8 C atoms,
b) a finely divided silicic acid and, if appropriate, other additional fillers and/or colour pigments,
c) finely divided $TiO_2$ with a BET surface area of greater than 20 $m^2/g$ and a particle size below 0.5 µm, which has been obtained by decomposition and precipitation in water,
d) platinum and/or one of its sulphur-free compounds, with or without a carrier,
e) a curing agent, such as, for example, an organic peroxide and/or a hydrogen siloxane or hydrogen silane, characterised in that the moulding compositions additionally contain, in a quantity of 0.05 - 10 parts by weight per 100 parts by weight of a) of the abovementioned mixture components
f) one or more nitrogen compounds from the group comprising uric acid, urea, guanine, cyanoguanidine, aminoguanidine, diphenylguanidine and/or semicarbazide.

2. Use of the polysiloxane compositions according to Claim 1 for the production of flame-resistant articles.

**Revendications**

1. Masses de moulage polysiloxaniques durcissables en produits anti-inflammables, consistant en
a) un diorganopolysiloxane de formule moyenne

$$R_nSiO_{\frac{4-n}{2}}$$

avec 1,9 à 2,05 radicaux organiques par atome de silicium, les radicaux pouvant être des radicaux alcoyle, alcényle et/ou aryle ayant 1 à 8 atomes de carbone,
b) une silice finement divisée et aussi éventuellement d'autres matières de charge et/ou pigments colorés supplémentaires,
c) du $TiO_2$ finement divisé ayant une surface BET supérieure à 20 $m^2/g$ et une granulométrie inférieure à 0,5 µm, qui a été obtenu par attaque et précipitation dans de l'eau,
d) du platine et/ou en un de ses composés exempts de soufre, avec et sans support,
e) un agent durcissant, comme par exemple un peroxyde organique et/ou un hydrogénosiloxane ou -silane, caractérisées en ce que les masses de moulage contiennent en plus, en une quantité de 0,05 à 10 parties en poids par 100 parties en poids de a) des constituants du mélange cités plus haut,
f) un ou plusieurs composés azotés du groupe acide urique, urée, guanine, cyanoguanidine, aminoguanidine, diphénylguanidine et/ou semicarbazide.

2. Utilisation des masses de polysiloxanes selon la revendication 1 pour la fabrication d'articles anti-inflammables.